(19) Europäisches Patentamt
European Patent Office
Office européen des brevets

(11) EP 3 724 252 B1

(12) **EUROPÄISCHE PATENTSCHRIFT**

(45) Veröffentlichungstag und Bekanntmachung des Hinweises auf die Patenterteilung:
**25.05.2022 Patentblatt 2022/21**

(21) Anmeldenummer: **18796697.3**

(22) Anmeldetag: **13.11.2018**

(51) Internationale Patentklassifikation (IPC):
***C08G 59/64*** *(2006.01)* ***C08G 59/68*** *(2006.01)*

(52) Gemeinsame Patentklassifikation (CPC):
**C08G 59/64; C08G 59/686**

(86) Internationale Anmeldenummer:
**PCT/EP2018/081098**

(87) Internationale Veröffentlichungsnummer:
**WO 2019/115110 (20.06.2019 Gazette 2019/25)**

(54) **HÄRTERKOMPONENTE FÜR MEHRKOMPONENTEN-EPOXIDHARZMASSE UND MEHRKOMPONENTEN-EPOXIDHARZMASSE**

CURING COMPONENTS FOR MULTI-COMPONENT EPOXY RESIN MASS AND MULTI-COMPONENT EPOXY RESIN MASS

COMPOSANT DURCISSEUR POUR MASSE DE RÉSINE ÉPOXY À PLUSIEURS COMPOSANTS ET MASSE DE RÉSINE ÉPOXY À PLUSIEURS COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2017 EP 17207545**

(43) Veröffentlichungstag der Anmeldung:
**21.10.2020 Patentblatt 2020/43**

(73) Patentinhaber: **Hilti Aktiengesellschaft**
**9494 Schaan (LI)**

(72) Erfinder: **BEHRENS, Nicole**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 2 826 796**
**WO-A1-2013/048851**
**WO-A1-2013/063236**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft eine Härterkomponente für eine Mehrkomponenten-Epoxidharzmasse zur chemischen Befestigung von Konstruktionselementen sowie eine Mehrkomponenten-Epoxidharzmasse. Ebenso betrifft die Erfindung die Verwendung eines Benzoxazin-Amin-Addukts als Beschleuniger in einer Härterkomponente für eine Mehrkomponenten-Epoxidharzmasse.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern in verschiedenen Untergründen verwendet. Zur Anwendung auf Baustellen im Freien müssen die Mörtelmassen einerseits auch bei tiefen Temperaturen gut handhabbar sein und sollen andererseits bei erhöhten Temperaturen ein nur geringes Kriechen zeigen. Gleichzeitig sollen die Mörtelmassen aber eine lange Verarbeitungsdauer besitzen und in einem breiten Temperaturbereich schnell und vollständig aushärten, wobei die ausgehärteten Mörtelmassen auch bei feuchten Bohrlöchern und tiefen Temperaturen hohe Lastwerte erzielen und eine gute Wärmeformbeständigkeit aufweisen sollen.

Diese zum Teil widersprüchlichen Eigenschaftsprofile sind nicht ohne weiteres zu erfüllen. So ist es bei herkömmlichen Mörtelmassen üblich, zur Erzielung einer guten Handhabbarkeit bei tiefen Temperaturen einen hohen Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Aushärtezeit entgegensteht. Mörtelmassen auf Epoxid-Amin-Basis weisen außerdem eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen. Das Einstellen der Aushärtezeit von Mörtelmassen auf Epoxid-Amin-Basis erfolgt in der Regel durch die Auswahl eines entsprechenden Amins und/oder durch Zugabe von Katalysatoren wie beispielsweise tertiären Aminen, Alkoholen und Säuren.

Die EP 014 99 89 A2 beschreibt eine wässrige Dispersion aus Benzoxazin und protoniertem Amin. Die Dispersionen können getrocknet und gehärtet werden, um Oberflächenbeschichtungen und Grundierungen herzustellen. Die Mischung aus Benzoxazin und Amin wird bei 135°C gehärtet.

Die WO 2013/063236 A1 beschreibt ein Mehrkomponentensystem insbesondere für Beschichtungen, welches aus Benzoxazin, Amin und Epoxid besteht und das bei erhöhten Temperaturen von ca. 100°C aushärtet. Als mögliche Zwischenprodukte werden Benzoxazin-Amin-Epoxid- und Benzoxazin-Amin-Addukte postuliert.

Die WO 2013/048851 A1 beschreibt Oligo- und Polymere aus der Reaktion von Benzoxazin und einer Mischung aus Amin und Thiol. Es wird eine aushärtbare Zusammensetzung aus Benzoxazin, Thiol und Amin offenbart, wobei die Härtungstemperatur bei mindestens 100°C liegt. Die EP 2 826 796 A1 beschreibt ein Hybridhärter, der ein Gemisch aus mindestens einem Amin, ausgewählt unter aliphatischen, alicyclischen und aromatischen Aminen, wobei das Amin im Mittel mindestens zwei reaktive Wasserstoffatome, gebunden an ein Stickstoffatom, pro Molekül aufweist, als Härter und einem Novolakharz.

Der Nachteil der aus dem Stand der Technik bekannten Epoxidsysteme, in denen Benzoxazine zum Einsatz kommen, ist deren langsame Aushärtungszeit bei Raumtemperatur. Dieser Umstand macht diese Systeme zur chemischen Befestigung, insbesondere zur Verankerung von Befestigungsmitteln in Bohrlöchern als chemischer Dübel, ungeeignet. Eine Erhöhung der Temperatur auf über 80 °C ist bei Anwendungen, gerade im Außenbereich unpraktikabel. Insbesondere die aus dem Stand der Technik bekannten Gemische, die aus einer Benzoxazin-, Amin- und einer Epoxidkomponente bestehen, sind daher für den Einsatz auf Baustellen zu langsam in ihrer Aushärtung und daher ungeeignet.

Weitere Substanzen wie tertiäre Amine, Alkohole, Säuren und Novolakharze, die als Beschleuniger verwendet werden können, haben aufgrund der zugesetzten Menge und ihren Eigenschaften einen Einfluss auf die Rezeptur der Epoxidharzmasse. Eine Änderung der Anteile von Komponenten in der Mörtelmasse hat in der Regel jedoch deutliche Veränderungen der Endeigenschaften der ausgehärteten Mörtelmasse zur Folge. Insbesondere sind hier häufig Änderungen der Lastwerte des ausgehärteten Mörtels zu beobachten.

Die Aufgabe der Erfindung ist es daher, eine Härterkomponente für Epoxidsysteme bereitzustellen, mit der die Aushärtung einer Mehrkomponenten-Epoxidmasse bei niedrigen Temperaturen in einem für den Bausektor akzeptablen Zeitrahmen ermöglicht wird. Gleichzeitig soll aber eine ausreichende Verarbeitungszeit erhalten bleiben.

Die der Erfindung zu Grunde liegende Aufgabe wird durch eine Härterkomponente gemäß Anspruch 1 gelöst. Bevorzugte Ausführungsformen der erfindungsgemäßen Härterkomponente sind in den Unteransprüchen angegeben, die wahlweise miteinander kombiniert werden können.

Gegenstand der Erfindung ist weiterhin eine Mehrkomponenten-Epoxidharzmasse gemäß Anspruch 6. Bevorzugte Ausführungsformen der erfindungsgemäßen Epoxidharzmasse sind in den Unteransprüchen angegeben, die wahlweise miteinander kombiniert werden können.

Die Erfindung umfasst ferner die Verwendung einer Mehrkomponenten-Epoxidharzmasse zur chemischen Befestigung gemäß nachstehendem Anspruch 10 sowie die Verwendung eines Benzoxazin-Amin-Addukts als Beschleuniger in einer Härterkomponente für die Epoxidharzmasse.

Die Härterkomponente (B) für eine Mehrkomponenten-Epoxidharzmasse zur chemischen Befestigung von Konstruktionselementen umfasst erfindungsgemäß ein Benzoxazin-Amin-Addukt, wobei das Benzoxazin-Amin-Addukt ausgewählt ist aus der Gruppe bestehend aus Substanzen gemäß Formel **Ia**, Substanzen gemäß Formel Ib und Mischungen daraus, mit den folgenden Strukturen:

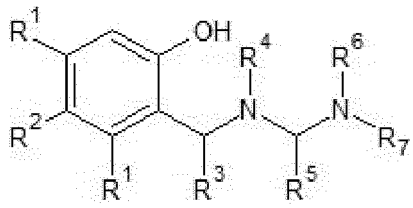

**Ia,**

und

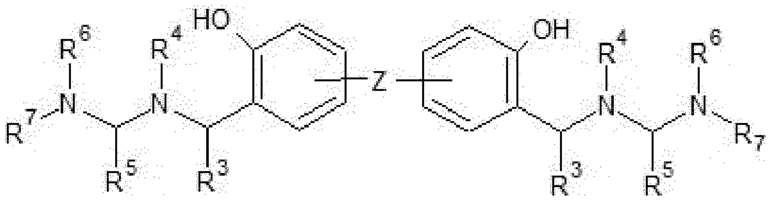

**Ib,**

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen von zwei oder mehreren dieser Reste, wobei die Reste jeweils unsubstituiert oder wahlweise substituiert sein können;

wobei $R^6$ und $R^7$ jeweils unabhängig H oder einen Amino-, Diamino- oder Polyamino-Rest bedeuten, die aus der Gruppe bestehend aus aliphatischen, alicyclischen, aromatischen Aminresten und außerdem Kombinationen aus zwei oder mehreren dieser Reste ausgewählt sind, wobei die Reste jeweils unsubstituiert oder wahlweise substituiert sein können;

wobei Z ausgewählt ist aus einer direkten Bindung, -C(O)-, -S-, -O-, -S(O)-, $-S(O)_2-$ , $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$ , $-[C(R^8)(R^9)]_m-S(O)_2-[C(R^{10})(R^{11})]_n-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 10 sind, bevorzugt gleich 0 bis 5, und wobei $R^8$, $R^9$, $R^{10}$ und $R^{11}$ jeweils unabhängig die gleiche Bedeutung wie die Reste $R^1$ bis $R^5$ besitzen.

Des Weiteren umfasst die Härterkomponente (B) ein Amin, welches aus der Gruppe bestehend aus aliphatischen, alicyclischen, aromatischen und araliphatischen Aminen ausgewählt ist, und welches pro Molekül im Mittel mindestens zwei an ein Stickstoffatom gebundene reaktive Wasserstoffatome aufweist.

Die Härterkomponente (B) ist dadurch gekennzeichnet, dass das Benzoxazin-Amin-Addukt in einem Anteil von 8,5 Gew.-% bis 75 Gew.-% in der Härterkomponente (B) vorhanden ist.

Im Stand der Technik werden Benzoxazin-Amin-Addukte beschrieben, die in Lösung im Gleichgewicht mit der jeweiligen Benzoxazin- und Aminkomponente vorliegen. Diese Mischungen können durch Erhitzen polymerisiert werden. Wird einer Mischung aus Benzoxazin und Amin noch eine Epoxidkomponente zugegeben, so entsteht eine Vielzahl verschiedener Addukte aus diesen drei Komponenten, die ebenfalls bei Erhitzung polymerisieren.

Überraschenderweise hat sich nun gezeigt, dass Härterkomponenten, die Benzoxazin-Amin-Addukte in einer Konzentration von wenigstens 8,5 Gew.-% enthalten, vorteilhafte Eigenschaften gegenüber Härterkomponenten ohne diese Addukte bzw. mit den Addukten in geringerer Konzentration aufweisen. Werden diese Härterkomponenten in Mehrkomponenten-Epoxidharzmassen eingesetzt, wird die Aushärtezeit der Massen bei Raumtemperatur durch die

Anwesenheit der Benzoxazin-Amin-Addukte herabgesetzt. Hierdurch besteht die Möglichkeit, dass insbesondere im Bausektor Folgearbeiten früher durchgeführt werden können, was zu einer Zeitersparnis führt.

Gegenstand der Erfindung ist somit auch die Verwendung eines Benzoxazin-Amin-Addukts als Beschleuniger in einer Härterkomponente für eine Epoxidharzmasse.

Die Erfindung ermöglicht den Einsatz von Benzoxazin-Amin-Addukt-enthaltenden Epoxidharzmassen als sogenannte "chemische Dübel" bei Temperaturen, die auf einer Baustelle üblich sind. Damit wird ein chemischer Dübel erhalten, der vorteilhafte Lasteigenschaften auch nach kurzer Aushärtezeit bei Raumtemperatur aufweist.

Im Sinne der Erfindung bedeutet: "aliphatische Verbindung" eine acyclische oder cyclische, gesättigte oder ungesättigte Kohlenstoffverbindung, ausgenommen aromatische Verbindungen; "alicyclische Verbindung" eine Verbindung mit einer carbocyclischen Ringstruktur, ausgenommen Benzolderivate oder andere aromatische Systeme; "aromatische Verbindung" eine Verbindung, die der Hückel (4n+2)-Regel folgt; und "araliphatische Verbindung" eine aliphatische Verbindung mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist.

"Amin" bedeutet eine Verbindung, die durch Austausch von einem, zwei oder drei Wasserstoffatomen durch Kohlenwasserstoffgruppen aus Ammoniak abgeleitet ist und die allgemeine Struktur $RNH_2$ (primäres Amin), $R_2NH$ (sekundäres Amin) und $R_3N$ (tertiäres Amin) aufweist (IUPAC, Compendium of Chemical Terminology, 2nd ed. (the "Gold Book"); compiled by A. D. McNaught and A. Wilkinson, Blackwell Scientific Publications, Oxford (1997)).

"Substituiert" im Sinne der Erfindung bedeutet, dass ein Wasserstoffatom in einem Kohlenwasserstoffrest durch ein anderes Atom oder eine Atomgruppe ersetzt wird. Bevorzugt sind $R^3$ und $R^5$ im Benzoxazin-Amin-Addukt gemäß den Strukturen Ia und Ib jeweils H.

Weiterhin bevorzugt ist Z ausgewählt ist aus einer direkten Bindung, $-C(R^8)(R^9)-$, - $C(R^8)(aryl)-$, -C(O)-, -S-, -O-, -S(O)-, $-S(O)_2-$, einem divalenten Heterozyklus und - $[C(R^8)(R^9)]_m$-Arylen-$[C(R^{10})(R^{11})]_n$-, wobei m und n jeweils unabhängig voneinander gleich 0 bis 5 sind. Besonders bevorzugt ist Z ausgewählt aus einer direkten Bindung oder $-C(R^8)(R^9)-$, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

In einer vorteilhaften Ausführungsform sind $R^3$ und $R^5$ im Benzoxazin-Amin-Addukt gemäß den Strukturen Ia und Ib jeweils H, und Z hat die vorstehend angegebene Bedeutung.

In einer bevorzugten Ausführungsform ist das Benzoxazin-Amin-Addukt in einem Anteil von 9 Gew.-% bis 65 Gew.-% in der Härterkomponente (B) vorhanden, bevorzugt von 9,5 Gew.-% bis 55 Gew.-%, weiter bevorzugt von 10 Gew.-% bis 45 Gew.-% und besonders bevorzugt von 10 Gew.-% bis 35 Gew.-%.

Das Benzoxazin-Amin-Addukt wird durch die Umsetzung wenigstens einer Benzoxazinkomponente mit wenigstens einer Aminkomponente, bevorzugt einem aromatischen oder araliphatischen Amin, einer Diamin- und/oder Polyaminkomponente, erhalten. Geeignete Benzoxazine für die Herstellung des Benzoxazin-Amin-Addukts haben, ohne den Umfang der Erfindung einzuschränken, bevorzugt die folgende Struktur:

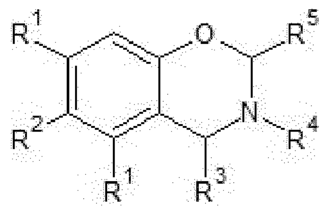

**IIa,**

oder

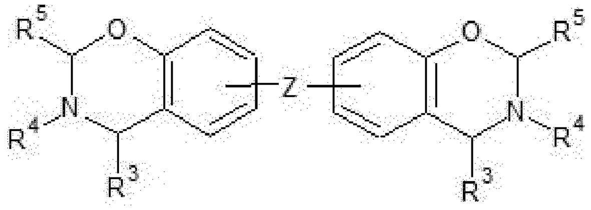

**IIb,**

worin $R^1$ bis $R^5$ und Z die oben angegebenen Bedeutungen besitzen.

In vorteilhaften Ausführungsformen des Benzoxazin-Amin-Addukts bedeuten $R^3$ und $R^5$ jeweils H, und Z ist ausgewählt ist aus einer direkten Bindung, $-C(R^8)(R^9)-$, $-C(R^8)(aryl)-$, -C(O)-, -S-, -O-, -S(O)-, $-S(O)_2-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 5 sind. Besonders bevorzugt ist Z ausgewählt aus einer direkten Bindung oder $-C(R^8)(R^9)-$, wobei $R^8$ und $R^9$ jeweils unabhängig ausgewählt sind aus H oder $C_1$-$C_4$-Alkylresten, bevorzugt H oder Methyl, oder zusammen einen divalenten Laktonrest bilden.

Bevorzugt werden die Benzoxazine ausgewählt aus den folgenden Strukturen:

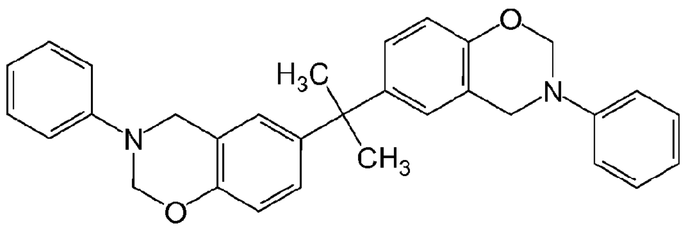

IIc,

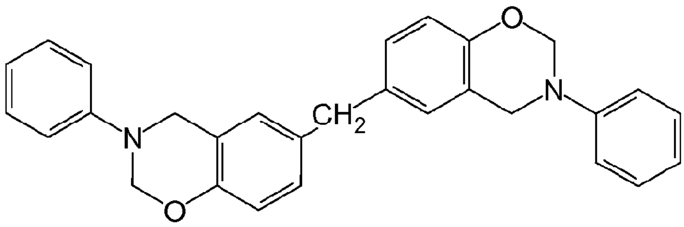

IId,

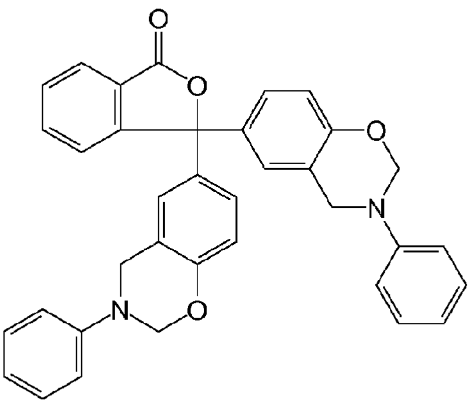

IIe,

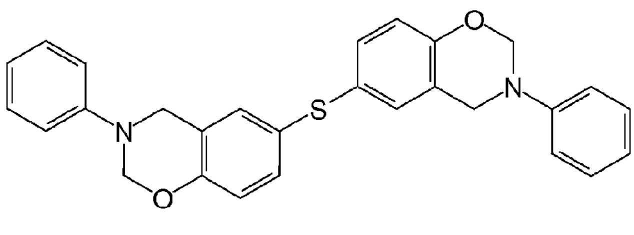

IIf

und

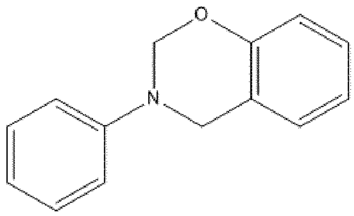

IIg.

Geeignete Amine für die Herstellung des Benzoxazin-Amin-Addukts und/oder zur Verwendung als Härter in der Härterkomponente (B) sind, ohne den Umfang der Erfindung einzuschränken, bevorzugt ausgewählt aus der Gruppe der unverzweigten oder verzweigten $C_2$-$C_{10}$-Alkyldiamine, der $C_2$-$C_{10}$-Polyalkylen-Polyamine und der aromatischen und araliphatischen Amine, welche bevorzugt einen substituierten oder unsubstituierten Benzolring enthalten.

Das Amin kann entweder alleine oder als Gemisch aus zwei oder mehr der genannten Amine eingesetzt werden. Als vorteilhaft hat sich ein Amingemisch erwiesen, das aus zwei oder mehr Aminen zusammengesetzt ist.

Die Alkyldiamine sind bevorzugt ausgewählt aus 2,2,4- oder 2,4,4-Trimethyl-1,6-diaminohexan und Gemischen davon (TMD), 1-Amino-3-aminomethyl-3,5,5-trimethylcyclohexan (IPDA), 1,3-Bis(aminomethyl)-cyclohexan (1,3-BAC), 1,4-Bis(aminomethyl)-cyclohexan (1,4 -BAC), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin) und 1,6-Hexamethylendiamin.

Die Polyalkylen-Polyamine sind bevorzugt ausgewählt aus Diethylentriamin (DETA), Triethylentetramin (TETA), Tetraethylenpentamin (TEPA) und Pentaethylenhexamin (PEHA).

Die aromatischen Amine sind bevorzugt unter Diethylmethylbenzoldiamin und 4,4'-Sulfonyldianiline und die araliphatischen Polyamine sind bevorzugt unter 1,3-Benzoldimethanamin (mXDA) und 1,4-Benzoldimethanamin (pXDA) und N,N'-Dimethyl-1,3-benzoldimethanamin ausgewählt.

Besonders bevorzugte Amine sind 1-Amino-3-aminomethyl-3,5,5-trimethylcyclohexan (IPDA), 2-Methyl-1,5-pentandiamin (DYTEK A), m-Xylylendiamin (mXDA) und 1,3-Bis(aminomethyl)-cyclohexan (1,3-BAC) und Mischungen daraus.

Weiter geeignet sind beispielsweise die folgenden Amine: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 1,3-Diaminopentan, 1,2-Bis(aminomethyl)cyclohexan, 1,2- und 1,4-Diaminocyclohexan (1,2-DACH und 1,4-DACH), Bis(4-aminocyclohexyl)methan, Bis(4-amino-3-methylcyclohexyl)methan, 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, 5-(Aminomethyl)bicyclo[[2.2.1]hept-2-yl]methylamin (NBDA, Norbornandiamin), Dimethyldipropylentriamin, Dimethylaminopropylaminopropylamin (DMAPAPA), Diaminodicyclohexylmethan (PACM), gemischte polycyclische Amine (MPCA) (z.B. Ancamine 2168), Dimethyldiaminodicyclohexylmethan (Laromin C260), N-Ethylaminopiperazin (N-EAP), 1,14-Diamino-4,11-dioxatetradecan, Dipropylentriamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis(amino-methyl)tricyclopentadien, 1,8-Diamino-p-menthan, Bis-(4-amino-3,5-dimethylcyclohexyl)methan, Dipentylamin, N-2-(Aminoethyl)piperazin (N-AEP), N-3-(Aminopropyl)piperazin und Piperazin.

Als Benzoxazin- und Aminkomponente zur Herstellung eines erfindungsgemäßen Benzoxazin-Amin-Addukts kommen alle oben genannten Substanzen oder Mischungen daraus in Betracht. Dem Fachmann sind verschiedene Herstellungsverfahren des Benzoxazin-Amin-Addukts bekannt.

Zur Herstellung des Benzoxazin-Amin-Addukts wird vorzugsweise eine der oben genannten Benzoxazinkomponenten in einem Lösungsmittel gelöst bei und bei erhöhter Temperatur mit der Aminkomponente umgesetzt. Vorzugsweise wird das Amin im Überschuss zugegeben. Anstelle des Lösungsmittels kann das Benzoxazin auch in einem Überschuss an Aminkomponente gelöst werden.

Die Reaktionsdauer beträgt vorzugsweise 30 h oder weniger, bevorzugt 26 h oder weniger und besonders bevorzugt höchstens etwa 24 h.

Die Reaktionstemperatur beträgt vorzugsweise mindestens 50 °C und weniger als 80 °C, bevorzugt weniger als 75 °C, weiter bevorzugt weniger als 70°C, noch weiter bevorzugt weniger als 65°C und besonders bevorzugt weniger als 60°C. Das erhaltene Benzoxazin-Amin-Addukt wird isoliert oder als Lösung in der Aminkomponente erhalten.

Gemäß einem weiteren Verfahren wird die Benzoxazinkomponente in der Aminkomponente gelöst. Sie kann mit weiteren Substanzen gemischt werden, insbesondere mit Substanzen, die zusätzlich in einer Härterkomponente (B) eingesetzt werden. Die Mischung wird für mindestens 5 Tage, bevorzugt mindestens 6 Tage, bevorzugter mindestens eine Woche bei Raumtemperatur (21 °C) gelagert, um eine Mischung mit einem Anteil an Benzoxazin-Amin-Addukt von

wenigstens 8,5 Gew.-% zu erhalten. Wird die Mischung nicht ausreichend lang gelagert, so ist keine ausreichend hohe Benzoxazin-Amin-Addukt-Konzentration vorhanden.

Die Härterkomponente (B) umfasst ferner ein Amin als Härter. Das als Härter verwendete Amin ist ein Diamin oder Polyamin, das aus der Gruppe bestehend aus aliphatischen, alicyclischen, aromatischen und araliphatischen Aminen ausgewählt ist, und weist pro Molekül im Mittel mindestens zwei an ein Stickstoffatom gebundene reaktive Wasserstoffatome auf. Das Amin kann aus allen oben genannten Aminen und den für Epoxid-Amin-Systeme üblichen und dem Fachmann bekannten Aminen ausgewählt werden.

Das als Härter eingesetzte Amin und das zur Herstellung des Benzoxazin-Amin-Addukts verwendete Amin können gleich oder verschieden sein. Bevorzugt werden die gleichen Amine sowohl als Härter als auch zur Herstellung des Benzoxazin-Amin-Addukts verwendet.

Als Ersatz für die Amine und/oder als weiterer Zusatz für die Härterkomponente (B) können auch Thiole, Dithiole und/oder Polythiole verwendet werden, die bevorzugt aus der Gruppe bestehend aus aliphatischen, alicyclischen, aromatischen und araliphatischen Thiolen sowie Mischungen daraus ausgewählt sind.

In einer weiteren vorteilhaften Ausführungsform umfasst die Härterkomponente (B) wenigstens einen weiteren Zusatz ausgewählt aus der Gruppe von Beschleunigern, Haftvermittlern, Verdickern und Füllstoffen.

Als Beschleuniger können Novolake, insbesondere Novolakharze, und styrolisierte Phenole zum Einsatz kommen. Weitere Beschleuniger, die bevorzugt zusammen mit den Novolaken und/oder styrolisierten Phenolen verwendet werden, sind beispielsweise tertiäre Amine, Imidazole oder tertiäre Aminophenole, Organophosphine, Lewis-Basen oder -Säuren wie Phosphorsäureester, oder Gemische von zwei oder mehr davon.

Die Beschleuniger sind in der Härterkomponente (B) in einem Gewichtsanteil von 0,001 bis 20 Gew.-%, bevorzugt 0,001 bis 5 Gew.-%, enthalten, bezogen auf das Gesamtgewicht der Härterkomponente (B). Beispiele für geeignete Beschleuniger sind insbesondere Tris-2,4,6-dimethylaminomethylphenol, 2,4,6-Tris(dimethylamino)phenol und Bis[(dimethylamino)methyl]phenol. Ein geeignetes Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (AirProducts, Belgien).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mit weiteren reaktiven organischen Gruppen funktionalisiert sind, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-triethoxysilan und 3-Glycidyloxypropyl-trimethoxysilan bevorzugt.

Der Haftvermittler kann in einer Menge bis zu 10 Gew.-%, bevorzugt 0,1 Gew.-% bis 5 Gew.-%, bezogen auf das Gesamtgewicht der Härterkomponente (B), enthalten sein.

Als Verdicker dienen bevorzugt Kieselsäuren. Ein Verdicker kann in einer Menge bis zu 10 Gew.-%, bevorzugt 0,1 Gew.-% bis 5 Gew.-%, bezogen auf das Gesamtgewicht der Härterkomponente (B), enthalten sein.

Als Füllstoffe dienen bevorzugt anorganische Füllstoffe insbesondere Zemente wie Portlandzement oder Tonerdeszement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Der Anteil an Füllstoffen beträgt vorzugsweise 0 Gew.-% bis 90 Gew.-%, bevorzugt Gew.-% 10 bis 90 Gew.-%, bevorzugter 15 Gew.-% bis 75 Gew.-% und noch bevorzugter 20 Gew.-% bis 50 Gew.-% und noch weiter bevorzugt 25 Gew.-% bis 30 Gew.-%, bezogen auf das Gesamtgewicht der Härterkomponente (B).

In einer vorteilhaften Ausführungsform weist die Härterkomponente (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ. Der AHEW-Wert wird aus dem Molekulargewicht (Mw) des Amins geteilt durch die Anzahl reaktiver Wasserstoffatome pro Molekül ermittelt (H-Äq. = Mw/Funktionalität).

Experimentell kann der AHEW-Wert durch Bestimmung der Glasübergangstemperatur (Tg) einer Mischung aus Epoxidharz (mit bekanntem EEW) und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("Tg2") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler Tg2: 1 g Amin mit 4,65 g Epoxidharz

$$\text{AHEW (Amin)} = \frac{158}{4{,}65} = 34$$

Die vorliegende Erfindung betrifft außerdem eine Mehrkomponenten-Epoxidharzmasse mit einer Epoxidharzkomponente (A), die wenigstens ein härtbares Epoxidharz enthält, und einer Härterkomponente (B) wie zuvor beschrieben.

Die Mehrkomponenten-Epoxidharzmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendung mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln wie Ankerstangen, Ankerbolzen, (Gewinde)stangen, (Gewinde)hülsen, Betoneisen, Schrauben und dergleichen in Bohrlöchern in verschiedenen Untergründen, beispielsweise in (Stahl)beton, Mauerwerk, anderen mineralischen Materialien, Metallen (z.B. Stahl), Keramiken, Kunststoffen, Glas und Holz.

Die obigen Ausführungen zur erfindungsgemäßem Härterkomponente (B) und ihrer Zusammensetzung gelten auch für die Mehrkomponenten-Epoxidharzmasse.

Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Beispiele für die zur Herstellung der Epoxidharze eingesetzten mehrwertigen Phenole sind Resorcin, Hydrochinon, 2,2-Bis-(4-Hydroxyphenyl)propan (Bisphenol A), Isomerengemische des Dihydroxyphenylmethans (Bisphenol F), TetrabromBisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem Epoxyäquivalentgewicht (EEW) von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $Mn \leq 2000$ g/mol.

Der Anteil an Epoxidharz in der Epoxidkomponente (A) beträgt >0 Gew.-% bis 100 Gew.-%, bevorzugt 10 Gew.-% bis 70 Gew.-% und besonders bevorzugt 30 Gew.-% bis 60 Gew.-%, bezogen auf das Gesamtgewicht der Harzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether oder Trimethylolpropantriglycidylether (TMPTGE). Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE).

Die Reaktivverdünner liegen bevorzugt in einer Menge von 0 Gew.-% bis 60 Gew.-% vor, bevorzugter von 1 Gew.-% bis 20 Gew.-%, bezogen auf das Gesamtgewicht der Harzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

In einer weiteren Ausführungsform kann die Epoxidharzkomponente (A) einen Co-Beschleuniger enthalten, soweit dieser mit den Epoxidharzen verträglich ist. Als Co-Beschleuniger können beispielsweise tertiäre Amine, Imidazole oder tertiäre Aminophenole, Organophosphine, Lewis-Basen oder -Säuren wie Phosphorsäureester, oder Gemische von zwei oder mehr davon verwendet werden. Diese Co-Beschleuniger können auch, wie vorgenannt, in der Härterkomponente (B) vorliegen.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (AirProducts, Belgien).

Der Anteil der Epoxidkomponente (A) an der Gesamtmasse der Mehrkomponenten-Epoxidharzmasse beträgt vorzugsweise 5 Gew.-% bis 90 Gew.-%, bevorzugt 20 Gew.-% bis 80 Gew.-%, bevorzugter 30 Gew.-% bis 80 Gew.-% oder noch bevorzugter 40 Gew.-% bis 80 Gew.-%.

Die Epoxidharze können ein EEW von 120 bis 2000 g/Eq aufweisen, vorzugsweise von 140 bis 400 g/Eq, insbesondere 150 bis 300 g/Eq aufweisen. Es können auch Mischungen mehrerer Epoxidharze verwendet werden.

Die Härterkomponente (B) kann die oben angegebenen Zusammensetzungen und Bestandteile umfassen.

Der Anteil der Härterkomponente (B) an der Gesamtmasse der Mehrkomponenten-Epoxidharzmasse beträgt vorzugsweise 10 Gew.-% bis 95 Gew.-%, bevorzugt 15 Gew.-% bis 80 Gew.-%, bevorzugter 15 Gew.-% bis 60 Gew.-% oder besonders bevorzugt 20 Gew.-% bis 40 Gew.-%.

In einer vorteilhaften Ausführungsform umfasst die erfindungsgemäße Mehrkomponenten-Epoxidharzmasse weitere Zusätze ausgewählt aus der Gruppe von Beschleunigern, Haftvermittlern, Reaktivverdünnern, Verdickern und Füllstoffen. Diese Zusätze können die gleichen Zusätze sein, wie sie oben für die Härterkomponente (B) beschrieben wurden.

Der Haftvermittler kann in einer Menge bis zu 10 Gew.-%, bevorzugt 0,1 Gew.-% bis 5 Gew.-%, bezogen auf das Gesamtgewicht der Epoxidharzkomponente (A), enthalten sein.

Als Füllstoffe dienen bevorzugt die oben beschriebenen anorganischen Füllstoffe. Die Füllstoffe können in einer oder in allen Komponenten der Mehrkomponenten-Mörtelmasse vorhanden sein. Der Anteil an Füllstoffen beträgt vorzugsweise 0 Gew.-% bis 90 Gew.-%, beispielsweise 10 Gew.-% bis 90 Gew.-%, bevorzugt 15 Gew.-% bis 75 Gew.-%, weiter bevorzugt 20 Gew.-% bis 50 Gew.-%, und weiter bevorzugt 25 Gew.-% bis 40 Gew.-%, bezogen auf das Gesamtgewicht der Mörtelmasse.

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Auch nicht reaktive Verdünnungsmittel (Lösungsmittel) können vorzugsweise in einer Menge bis zu 30 Gew.-% enthalten sein, bezogen auf das Gesamtgewicht der jeweiligen Komponente (Epoxidharz- und/oder Härterkomponente), beispielsweise von 1 Gew.-% bis 20 Gew.-%. Beispiele für geeignete Lösungsmittel sind Niederalkylketone wie Aceton, Diniederalkyl-niederalkanoylamide wie Dimethylacetamid, Niederalkylbenzole wie Xylole oder Toluol, Phthalsäureester oder Paraffine.

Derartige weitere Zusätze können vorzugsweise in Gewichtsanteilen von insgesamt 0 Gew.-% bis 40 % zugesetzt sein, bezogen auf das Gesamtgewicht der Mörtelmasse.

Die Mehrkomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Zur bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxiden der Harzkomponente (A) unter Polyaddition, sodass die Mörtelmasse unter Umgebungsbedingungen innerhalb einer gewünschten Zeit, vorzugsweise innerhalb weniger Stunden, aushärtet.

Vorzugsweise härtet die Mehrkomponenten-Epoxidharzmasse bei Umgebungstemperatur aus. Unter Umgebungstemperatur versteht man die Temperatur, die am Einsatzort, bevorzugt einer Baustelle, herrscht, beispielsweise 5 bis 40 °C.

Vorzugsweise dauert die Aushärtung bei Raumtemperatur (21°C) weniger als 48 h, bevorzugt weniger als 30

h, bevorzugter weniger als 24 h, noch bevorzugter weniger als 18 h und noch weiter bevorzugt weniger als 12 h und am bevorzugtesten weniger als 9 h.

Die erfindungsgemäße Mehrkomponenten-Epoxidharzmasse wird bevorzugt zur chemischen Befestigung, insbesondere zur Verankerung von Befestigungselementen in Bohrlöchern, verwendet.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

**Herstellungsbeispiele**

**Epoxidharzkomponente (A)**

Als Epoxidharze wurden in den Beispielen die im Handel unter den Bezeichnungen DER 330 und DER 354 (Dow Europe) erhältlichen Bisphenol A-basierten beziehungsweise Bisphenol F-basierten Epoxidharze verwendet.

Als Haftvermittler wurde 3-Glycidyloxypropyl-trimethoxysysilan erhältlich unter der Bezeichnung Dynalsylan GLYMO™ (Evonik Industries) verwendet.

Als Reaktivverdünner wurden die im Handel unter den Bezeichnungen Polypox™ R3 (Dow Europe) und AralditeTM DY-T (Huntsman) erhältlichen 1,4-Butandioldiglycidylether und Trimethyolpropan-triglycidylether verwendet.

Die flüssigen Komponenten wurden per Hand vorgemischt. Anschließend wurden als Füllstoff Quarz (Millisil™ W12 der Firma Quarzwerke Frechen) und als Verdicker Kieselsäure (Cab-O-Sil™ TS- 720 der Firma Cabot Rheinfelden) zugegeben und die Mischung im Dissolver (PC Laborsystem, Volumen 1L) 10 min lang unter Vakuum bei 3500 U/min gerührt.

Die Zusammensetzung der in den Beispielen verwendeten Epoxidharzkomponente (A) ist in der nachfolgenden Tabelle 1 angegeben.

**Tabelle 1:** Zusammensetzung Epoxidharzkomponente (A)

| Stoff | Funktion | Gewichtsprozent [Gew.-%] |
|---|---|---|
| 3-Glycidyloxypropyl-trimethosysilan | Haftvermittler | 2,6 |
| Bisphenol A-basiertes Epoxidharz | Epoxidharz | 31,3 |
| Bisphenol F-basiertes Epoxidharz | Epoxidharz | 16,7 |
| 1,4-Butanediol-diglycidylether | Reaktivverdünner | 6,0 |
| Trimethylolpropan-triglycidylether | Reaktivverdünner | 6,0 |
| Quarz | Füllstoff | 34,7 |
| Kieselsäure | Verdicker | 2,7 |
| | | |
| **EEW [g/Eq]** | | **256** |

**Härterkomponente (B)**

<u>Ausgangsprodukte</u>

Die zur Herstellung der Härterkomponente (B) verwendeten Benzoxazine sind unter den Handelsnamen Araldite MT 35600 CH (Benzoxazin A; CAS-Nummer: 154505-70-1), Araldite MT 35700 CH (Benzoxazin F; CAS-Nummer: 214476-06-9) und Araldite MT 35710 FST (Benzoxazin FST: Mischung aus Benzoxazin F und 3-Phenyl-3,4-dihydro-2H-benzo[e][1,3]oxazin) von der Firma Huntsman Advanced Materials, Basel, Schweiz erhältlich. Als Amine wurden 1,3-Cyclohexandimethanamin (1,3-BAC) und m-Xylylendiamin (mXDA) der Firma Itochu Deutschland sowie 2-Methlypentamethylendiamin (Dytek A) der Firma Invista, Niederlande, zur Herstellung der Härterkomponente (B) verwendet.

Zusätzlich wurde zu den Härterkomponenten als Beschleuniger jeweils ein Gemisch von 2,4,6-Tris(dimethylaminomethyl)phenol und Bis[(dimethylamino)-methyl]phenol zugegeben, das unter dem Handelsnamen Ancamine™ K45 der Firma Air Products erhältlich ist.

Als Haftvermittler wurde 3-Aminopropyl-triethoxysilan verwendet, das unter dem Handelsnamen Dynasylan AMEO der Firma Evonik Degussa erhältlich ist.

Als Füllstoff wurde Quarz (Millisil™ W12 der Firma Quarzwerke Frechen) und als Verdicker Kieselsäure (Cab-O-Sil™ TS-720 der Firma Cabot Rheinfelden) verwendet.

Herstellung des Benzoxazin-Amin-Addukts

*Variante A*

Benzoxazin (1 eq) wurde in Chloroform gelöst. Das Amin (2,4 eq) wurde bei Raumrtemperatur (RT) unter Stickstoff hinzugetropft. Anschließend wurde die Lösung 24 h lang auf 55 °C erwärmt. Nach dieser Zeit wurde das Chloroform durch Destillation bei vermindertem Druck entfernt. Man erhielt einen gelben, bei Raumtemperatur festen Stoff.

Nach Variante A wurde das folgende Benzoxazin-Amin-Addukt hergestellt:
A1: Benzoxazin F/Dytek A

*Variante B*

Benzoxazin wurde in überschüssigen Amin gelöst, und die Lösung wurde unter Rühren 24 h lang auf 55°C erwärmt. Es wurde eine gelbe bis gelbbraune dickflüssige Lösung erhalten (Benzoxazin/Amin-Addukt ca. 60% in Amin).

Nach Variante B wurden die folgenden Benzoxazin-Amin-Addukte hergestellt:

B1: Benzoxazin A/Dytek A, 60%ig in Dytek A
B2: Benzoxazin F/1,3-BAC, 60%ig in 1,3-BAC
B3: Benzoxazin F/mXDA, 60%ig in mXDA
B4: Benzoxazin FST/1,3-BAC, 60%ig in 1,3-BAC
B5: Benzoxazin F/IPDA, 55%ig in IPDA

*Variante C*

Benzoxazin wurde in Amin entsprechend einer Rezeptur zur Herstellung einer Härterkomponente (B) gelöst. Anschließend wurden zu dieser Lösung die übrigen Komponenten der Härterkomponente (B) entsprechend der jeweiligen Rezeptur zugegeben und im Dissolver (PC Laborsystem, Volumen 1L) unter Vakuum bei 3500 U/min für 10 min gerührt. Die so hergestellte Härterkomponente (B) wurde vor dem Mischen mit der Epoxidharzkomponente (A) mindestens eine Woche lang gelagert, um die Umsetzung des Benzoxazins mit dem Amin zum Benzoxazin-Amin-Addukt sicherzustellen.

Nach Variante C wurde eine Härterkomponente (B) mit einem Benzoxazin/Amin-Addukt unter Verwendung des folgenden Benzoxazins hergestellt:

C1: Benzoxazin F
C2: Benzoxazin FST

Beispiele 1 bis 12

Zur Herstellung der Härterkomponente (B) der nachfolgenden Beispiele 1 bis 12 wurde das jeweilige Benzoxazin-Amin-Addukt oder das Benzoxazin in den flüssigen Bestandteilen gelöst oder als Lösung in Amin (Variante B) eingesetzt. Anschließend wurden Quarzmehl und Kieselsäure zugegeben und im Dissolver (PC Laborsystem, Volumen 1L) unter Vakuum bei 3500 U/min für 10 min gerührt.

Die nach der obigen Variante C hergestellte Härterkomponente (B) wurde mindestens 1 Woche lang bei Raumtemperatur gelagert, um die Bildung einer ausreichenden Menge des Benzoxazin/Amin-Addukts sicherzustellen.

Die Zusammensetzung der so hergestellten Härterkomponenten (B) ist in der nachfolgenden Tabelle 2 angegeben.

**Tabelle 2:** Zusammensetzung der Härterkomponente (B)

| Beispiel | 1 | 2 | 3 | 4 | 5 | 6 | 7 | 8 | 9 | 10 | 11 | 12 |
|---|---|---|---|---|---|---|---|---|---|---|---|---|
| Komponente | Gew.-% | | | | | | | | | | | |
| A1 | 29,9 | | | | 29,9 | | | | | | | |
| B1 | | 50,0 | | | | | | | | | | |
| B2 | | | 50,0 | | | | | | | | | |

(fortgesetzt)

| Beispiel | 1 | 2 | 3 | 4 | 5 | 6 | 7 | 8 | 9 | 10 | 11 | 12 |
|---|---|---|---|---|---|---|---|---|---|---|---|---|
| Komponente | Gew.-% | | | | | | | | | | | |
| B3 | | | | 50,0 | | | | | | 50,0 | 27,3 | |
| B4 | | | | | | 50,0 | | | 27,3 | | | |
| B5 | | | | | | | | | | | | 29,2 |
| C1 | | | | | | | 19,5 | | | | | |
| C2 | | | | | | | | 18,1 | | | | |
| mXDA | 24,1 | | | 4,0 | | | | | | 4,0 | 26,7 | |
| Dytek A | | 4,0 | | | | | 34,5 | | | | | |
| 1,3-BAC | | | 4,0 | | 24,1 | 4,0 | | 35,9 | 26,7 | | | 29,2 |
| Haftvermittler | 2,4 | 2,4 | 2,4 | 2,4 | 2,4 | 2,4 | 2,4 | 2,4 | 2,4 | 2,4 | 2,4 | 2,4 |
| Beschleuniger | 1,9 | 1,9 | 1,9 | 1,9 | 1,9 | 1,9 | 1,9 | 1,9 | 1,9 | 1,9 | 1,9 | 2,4 |
| Füllstoff | 39 | 39 | 39 | 39 | 39 | 39 | 39 | 39 | 39 | 39 | 39 | 32,5 |
| Verdicker | 2,7 | 2,7 | 2,7 | 2,7 | 2,7 | 2,7 | 2,7 | 2,7 | 2,7 | 2,7 | 2,7 | 4,3 |
| **AHEW [g/Eq]** | **100** | **83** | **97** | **85** | **103** | **97** | **83** | **97** | **79** | **94** | **76** | **83** |

Vergleichsbeispiele 1 bis 9

Zur Herstellung der Härterkomponente (B) gemäß den nachfolgenden Vergleichsbeispielen 1 bis 4 und 7 bis 9 wurde das Amin zu einer Benzoxazinkomponente gegeben und weniger als 24 h lang bei Raumtemperatur gerührt. Anschließend wurden die übrigen flüssigen Bestandteile zugegeben. Danach wurden das Quarzmehl und die Kieselsäure zugegeben und im Dissolver (PC Laborsystem, Volumen 1L) 10 min lang unter Vakuum bei 3500 U/min gerührt. Um die Umsetzung des Benzoxazins mit dem Amin zum Benzoxazin-Amin-Addukt zu vermeiden, wurde die so hergestellte Härterkomponente (B) mit der Epoxidharzkomponente (A) spätestens 48 h nach der Zugabe von Amin zum Benzoxazin gemischt und die Aushärtung als Dübel gestartet.

Die Herstellung der Härterkomponente (B) für die Vergleichsbeispiele 5 und 6 erfolgte mit einem nach der oben beschriebenen Variante B hergestellten Benzoxazin/Amin-Addukt.

In Tabelle 3 ist die Zusammensetzung der Härterkomponenten (B) der Vergleichsbeispiele 1 bis 9 gezeigt.

Tabelle 3: Zusammensetzung der Härterkomponente (B)

| Vergleichsbeispiel | 1 | 2 | 3 | 4 | 5 | 6 | 7 | 8 | 9 |
|---|---|---|---|---|---|---|---|---|---|
| Komponente | Gew.-% | | | | | | | | |
| B4 | | | | | 13,5 | 4,9 | | | |
| Benzoxazin F | 19,5 | | | | | | 18,6 | 10,0 | |
| Benzoxazin FST | | | 18,1 | 10,0 | | | | | |
| mXDA | | | | | | | 35,4 | 44,0 | 54,0 |
| Dytek A | 34,5 | 54,0 | | | | | | | |
| 1,3-BAC | | | 35,9 | 44,1 | 40,5 | 49,1 | | | |
| Haftvermittler | 2,4 | 2,4 | 2,4 | 2,4 | 2,4 | 2,4 | 2,4 | 2,4 | 2,4 |
| Beschleuniger | 1,9 | 1,9 | 1,9 | 1,9 | 1,9 | 1,9 | 1,9 | 1,9 | 1,9 |
| Füllstoff | 39 | 39 | 39 | 39 | 39 | 39 | 39 | 39 | 39 |
| Verdicker | 2,7 | 2,7 | 2,7 | 2,7 | 2,7 | 2,7 | 2,7 | 2,7 | 2,7 |
| **AHEW [g/Eq]** | **83** | **53** | **97** | **79** | **71** | **67** | **94** | **76** | **62** |

**Mörtelmassen und Auszugsversuche**

Die Epoxidharzkomponente (A) und die Härterkomponente (B) wurden in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterkomponente (B) gemäß den oben angegebenen Beispielen erhaltenen Mörtelmassen wurden unter Verwendung einer hochfesten Ankergewindestange M12 gemäß ETAG 001 Part 5 bestimmt, die in ein hammer- oder diamantgebohrtes Bohrloch mit einem Durchmesser von 14 mm und einer Bohrlochtiefe von 72 mm mit der jeweiligen Mörtelmasse in C20/25 Beton eingedübelt wurde.

Die Bohrlöcher wurden hierfür vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt.

Die untersuchten Bohrlöcher wurden in Versuchen 1 bis 6, 8 und 9 unter Verwendung eines Hammerbohrers und in Versuch 7 unter Verwendung eines Diamantbohrers präpariert.

In Versuchen 1 bis 6 sowie 8 und 9 wurde das Bohrloch zweimal mit Druckluft (6 bar) gereinigt, zweimal gebürstet und anschließend nochmals zweimal mit Druckluft (6 bar) ausgeblasen. In Versuch 7 wurde das Bohrloch einmal gespült, einmal gebürstet, nochmals gespült, für 10 Sekunden ausgeblasen, nochmals gebürstet und nochmals für 10 Sekunden ausgeblasen.

Die Aushärtezeit bei Versuch 1 betrug 24 h bei 23 °C. Bei den Versuchen 2 bis 6 betrug die Aushärtezeit 6 h bei 23 °C und bei Versuch 7 48 h bei 23 °C.

In Versuch 8 wurde das Bohrloch nach Bohren und Reinigung mit Wasser aufgefüllt. Das Injizieren des Mörtels geschah über eine Mischerverlängerung mit Stauzapfen in das wassergefüllte Bohrloch. Die Aushärtezeit des Mörtels betrug 48h bei 23°C.

Bei Versuch 9 betrug die Aushärtezeit im feuchten Bohrloch 24 h bei 23°C, gefolgt von einer Lagerung während 48 h bei 80 °C und dem Ziehen des Ankers bei einer Betontemperatur von 80°C +/- 2°C.

Die Versagenslast wurde durch zentrisches Ausziehen der Ankergewindestange mit enger Abstützung ermittelt. Die mit den Mörtelmassen unter Verwendung einer Härterkomponente (B) gemäß den Beispielen 1 bis 11 und den Vergleichsbeispielen 1 bis 9 erhaltenen Lastwerte sind der folgenden Tabelle 4 zu entnehmen.

**Tabelle 4:** Bestimmung der Lastwerte

| Beispiel | | 1 | 2 | 3 | 4 | 5 | 6 | 7 | 8 | 9 | 10 | 11 | 12 |
|---|---|---|---|---|---|---|---|---|---|---|---|---|---|
| Auszugs-versuche | Versuch Nummer | Lastwert [N/m] | | | | | | | | | | | |
| **trockener Beton** (hammergebohrt) | | | | | | | | | | | | | |
| Aushärtung 24h | 1 | 40,1 | 36,4 | 38,1 | 37,5 | 38,0 | 37,3 | 38,6 | 37,4 | | | | 35,4 |
| Aushärtung 6h | 2 | | 16,2 | | | | | | | | | | |
| Aushärtung 6h | 3 | | | | | | 22,6 | | | | | | |
| Aushärtung 6h | 4 | | | | | | | | | 15,6 | | | |
| Aushärtung 6h | 5 | | | | | | | | | | 17,7 | | |
| Aushärtung 6h | 6 | | | | | | | | | | | 10,6 | |
| **feuchter Beton** | | | | | | | | | | | | | |
| Aushärtung 48h (diamantgebohrt) | 7 | 35,9 | 32,2 | 35,9 | 36,2 | 36,2 | 34,7 | | | 33,4 | | | |
| Aushärtung 48h (hammergebohrt) | 8 | 23,9 | 23,8 | 24,7 | 27,3 | | 21,0 | | | 24,6 | | | |
| Aushärtung 24 h (Lagerung bei 80°C) | 9 | 21,9 | 19,5 | 24,5 | 22,0 | 24,2 | 25,3 | 20,2 | 26,4 | 25,6 | | | |

Tabelle 4: (Fortsetzung)

| Vergleichsbeispiel | | 1 | 2 | 3 | 4 | 5 | 6 | 7 | 8 | 9 |
|---|---|---|---|---|---|---|---|---|---|---|
| Auszugs-versuche | Versuch Nummer | Lastwert [N/m] | | | | | | | | |
| **trockener Beton** (hammergebohrt) | | | | | | | | | | |
| Aushärtung 24h | 1 | | | | | 38,3 | 38,4 | | | |
| Aushärtung 6h | 2 | 7,5 | 2,3 | | | | | | | |
| Aushärtung 6h | 3 | | | 15,7 | | | | | | |
| Aushärtung 6h | 4 | | | | 10,3 | 7,4 | 7,6 | | | |
| Aushärtung 6h | 5 | | | | | | | 15,1 | | |
| Aushärtung 6h | 6 | | | | | | | | | |
| **feuchter Beton** Aushärtung 48h (diamantgebohrt) | 7 | | | | | 33,9 | | | | |
| Aushärtung 48h (hammergebohrt) | 8 | | | | | 24,8 | | | | |
| Aushärtung 24 h (Lagerung bei 80°C) | 9 | | | | | 23,8 | | | | |

Die Mörtelmassen der Vergleichsbeispiele 1, 3, 4, 7 und 8 enthalten jeweils die gleiche Menge Benzoxazin wie die Massen der Beispiele 2, 6, 9, 10 und 11. Damit haben die erfindungsgemäßen Beispiele und das jeweilige Vergleichsbeispiel (so z. B. Vergleichsbeispiel 7 und Beispiel 10) vergleichbare Zusammensetzungen, wobei jedoch in den erfindungsgemäßen Beispielen das Benzoxazin und Amin bereits zum Addukt abreagiert sind, während in den Vergleichsbeispielen beide Spezies noch frei vorliegen.

Die Auszugsversuche nach 6 h zeigen, dass die Mörtelmassen der erfindungsgemäßen Beispiele jeweils höhere Lastwerte aufweisen als die Massen der Vergleichsbeispiele, in denen Benzoxazin und Amin noch frei vorliegen.

Die niedrigsten Lastwerte nach sechs Stunden weisen die Massen auf, die kein oder sehr wenig Benzoxazin enthalten (Vergleichsbeispiele 2, 5, 6 und 9). Das Benzoxazin-Amin-Addukt zeigt in den Auszugsversuchen bereits nach sechs Stunden eine deutlich beschleunigende Wirkung gegenüber den Massen ohne Benzoxazin und auch gegenüber den Massen, in denen Benzoxazin und Amin frei vorliegen. Auch das frei vorliegende Benzoxazin zeigt bereits eine beschleunigende Wirkung, die allerdings nicht so ausgeprägt ist, wie die Beschleunigungswirkung des Benzoxazin-Amin-Addukts.

Aus Versuch 9 ist erkennbar, dass die Art des Benzoxazins im Gegensatz zum Amin keinen Einfluss auf die Aushärtezeit hat. Ist ein Benzoxazin-Amin-Addukt in ausreichend hoher Konzentration enthalten, so beschleunigt dies die Aushärtung der Mörtelmasse.

**Bestimmung der Aushärtezeit**

Es wurde eine Epoxidharzkomponente (A) mit der in der nachfolgenden Tabelle 5 angegebenen Zusammensetzung hergestellt, Die flüssigen Komponenten wurden gemischt und im Dissolver (PC Laborsystem, Volumen 1L) unter Vakuum 10 min lang bei 3500 U/min gerührt.

**Tabelle 5:** Epoxidharzkomponente (A)

| Stoff | Funktion | Gewichtsprozent [Gew%] |
|---|---|---|
| Bisphenol A-basiertes Epoxidharz | Epoxidharz | 31,3 |
| Bisphenol F-basiertes Epoxidharz | Epoxidharz | 16,7 |
| 1,4-Butanediol-diglycidyl ether | Reaktivverdünner | 6,0 |
| Trimethyolpropan-triglycidylether | Reaktivverdünner | 6,0 |
| | | |
| EEW [g/Eq] | | 256 |

Als Härterkomponente (B) wurden die folgenden Mischungen oder Verbindungen eingesetzt:

Beispiel 13

Benzoxazin-Amin-Addukt aus Benzoxazin FST und 1,3-BAC (60 % in 1,3-BAC; (AHEW = 56 g/EQ), hergestellt nach der obigen Variante B.

Vergleichsbeispiel 10

Lösung aus Benzoxazin FST (Araldite MT 35710 FST) in 1,3-BAC (36,2 % Benzoxazin FST in 1,3-BAC; AHEW = 56 g/EQ). Die Lösung wurde 24 h vor der Messung hergestellt und bei Raumtemperatur gelagert.

Vergleichsbeispiel 11

Es wurde nur das Amin 1,3-BAC (AHEW = 35,6 g/EQ) verwendet.

Die Epoxidharzkomponente (A) wurde eingewogen und auf 5 °C temperiert. Nach ca. 30 min wurde die 5 °C kalte Härterkomponente (B) zugefügt. Der Ansatz wurde 1 min lang im Speedmixer bei 1500 RPM gemischt, dann in einen Tiegel überführt und nach Notieren der Probengröße sofort in den Ofen gesetzt.

Die Aushärtezeit der Mischung wurde mittels DSC-Messungen bestimmt. Die Aushärtung wurde in der DSC-Apparatur als isotherme Messung bei 21°C während 24 h verfolgt. Die Ergebnisse der DSC-Messungen sind in der folgenden Tabelle 6 angegeben.

**Tabelle 6:** DSC-Messungen

| Beispiel | Endset der Aushärtung [min] |
|---|---|
| Beispiel 13 | 358 |
| Vergleichsbeispiel 10 | 538 |
| Vergleichsbeispiel 11 | 601 |

Wie bei der Ermittlung der Lastwerte nach sechs Stunden zeigt sich auch in der DSC-Messung, dass die Aushärtung bei Verwendung des Benzoxazin-Amin-Addukts als Härterkomponente (B) am schnellsten abläuft. Liegen das Benzoxazin und das Amin unreagiert in freier Form vor, wird die Reaktion gegenüber dem Vergleichsbeispiel ohne Benzoxazin nur um etwa 60 min beschleunigt.

**Patentansprüche**

1. Härterkomponente (B) für eine Mehrkomponenten-Epoxidharzmasse zur chemischen Befestigung von Konstruktionselementen, umfassend ein Benzoxazin-Amin-Addukt, welches ausgewählt ist aus der Gruppe bestehend aus Substanzen gemäß Formel **Ia,** Substanzen gemäß Formel **Ib** oder Mischungen daraus, mit den folgenden Strukturen:

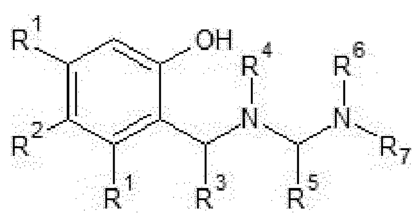

Ia,

und

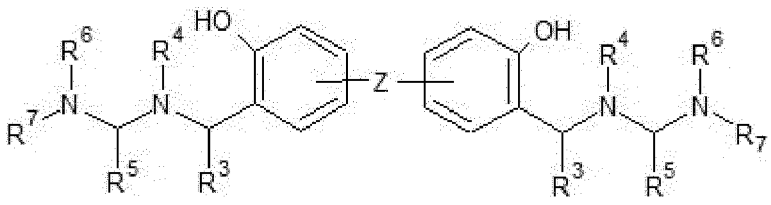

Ib,

wobei $R^1$, $R^2$, $R^3$, $R^4$ und $R^5$, jeweils unabhängig ausgewählt sind aus H, Alkyl-, Cycloalkyl-, Heterocycloalkyl-, Aryl-, Heteroaryl-, Arylalkyl-, Heteroalkyl-, Alkoxy-, Hydroxyl-, Hydroxyalkyl-, Carboxyl-, Halo-, Haloalkyl-, Amino-, Aminoalkyl-, Alkylcarbonyloxy-, Arylcarbonlyloxy-, Alkoxycarbonyl-, Alkylcarbonyl-, Alkylsulfonylamino-, Aminosulfonyl-, Sulfonsäure- oder Alkylsulfonyl-Resten, außerdem aus Kombinationen aus zwei oder mehreren dieser Reste, wobei die Reste jeweils unsubstituiert oder wahlweise substituiert sein können;
wobei $R^6$ und $R^7$ jeweils unabhängig H oder einen Amino-, Diamino- oder Polyamino-Rest bedeuten, die ausgewählt sind aus der Gruppe bestehend aus aliphatischen, alicyclischen, aromatischen oder araliphatischen Aminresten und außerdem Kombinationen aus zwei oder mehreren dieser Reste, wobei die Reste jeweils unsubstituiert oder wahlweise substituiert sein können;
wobei Z ausgewählt ist aus einer direkten Bindung, -C(O)-, -S-, -O-, -S(O)- , $-S(O)_2-$, $-C(R^8)(R^9)-$, $-[C(R^8)(R^9)]_m-C(R^8)(R^9)-[C(R^{10})(R^{11})]_n-$, - $[C(R^8)(R^9)]_m-C(R^8)(aryl)-[C(R^{10})(R^{11})]_n-$, $-[C(R^8)(R^9)]_m-C(O)-[C(R^{10})(R^{11})]_n-$ , $-[C(R^8)(R^9)]_m-S-[C(R^{10})(R^{11})]_n-$, $-[C(R^8)(R^9)]_m-O-[C(R^{10})(R^{11})]_n-$, - $[C(R^8)(R^9)]_m-S(O)-[C(R^{10})(R^{11})]_n-$, $-[C(R^8)(R^9)]_m-S(O)_2-[C(R^{10})(R^{11})]_n-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 10 sind, bevorzugt gleich 0 bis 5, wobei $R^8$, $R^9$, $R^{10}$ und $R^{11}$ jeweils unabhängig die gleiche Bedeutung wie die Reste $R^1$ bis $R^5$ besitzen; und
ein Amin, das aus der Gruppe bestehend aus aliphatischen, alicyclischen, aromatischen und araliphatischen Aminen ausgewählt ist, und das pro Molekül im Mittel mindestens zwei an ein Stickstoffatom gebundene reaktive Wasserstoffatome aufweist;
**dadurch gekennzeichnet, dass**
das Benzoxazin-Amin-Addukt in einem Anteil von 8,5 Gew.-% bis 75 Gew.-% in der Härterkomponente (B) vorhanden ist.

2. Härterkomponente (B) gemäß Anspruch 1, wobei $R^3$ und $R^5$ jeweils H bedeuten.

3. Härterkomponente nach Anspruch 1 oder 2, wobei Z ausgewählt ist aus einer direkten Bindung, $-C(R^8)(R^9)-$, $-C(R^8)(aryl)-$, -C(O)-, -S-, -O-, -S(O)-, $-S(O)_2-$, einem divalenten Heterozyklus und $-[C(R^8)(R^9)]_m$-Arylen-$[C(R^{10})(R^{11})]_n-$, wobei m und n jeweils unabhängig voneinander gleich 0 bis 5 sind.

4. Härterkomponente (B) nach einem der Ansprüche 1 bis 3, wobei $R^3$ und $R^5$ jeweils H bedeuten und wobei Z ausgewählt ist aus einer direkten Bindung und $-C(R^8)(R^9)-$, wobei $R^8$ und $R^9$ jeweils unabhängig ausgewählt sind aus H oder $C_1$-$C_4$-Alkylresten, bevorzugt aus H und Methyl, oder zusammen einen Laktonrest bilden.

5. Härterkomponente (B) nach einem der vorangehenden Ansprüche, wobei das Benzoxazin-Amin-Addukt erhältlich ist durch Umsetzen eines Benzoxazins mit einem Amin aus der Gruppe der aliphatischen und/oder araliphatischen Amine, Diamine und/oder Polyamine, wobei das Benzoxazin folgenden Strukturen aufweist:

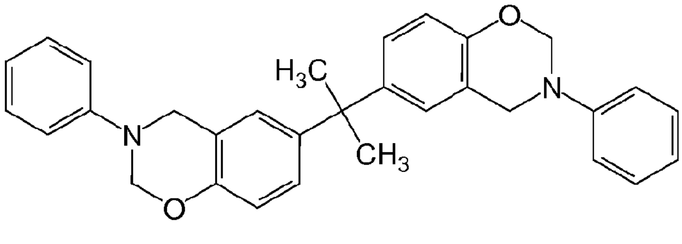

IIc,

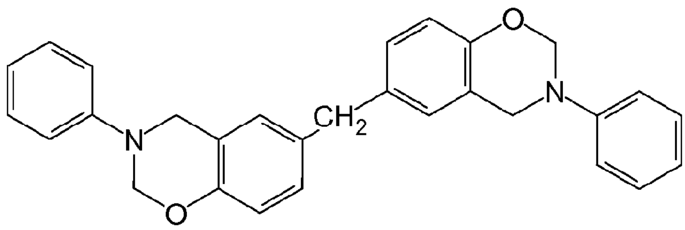

IId,

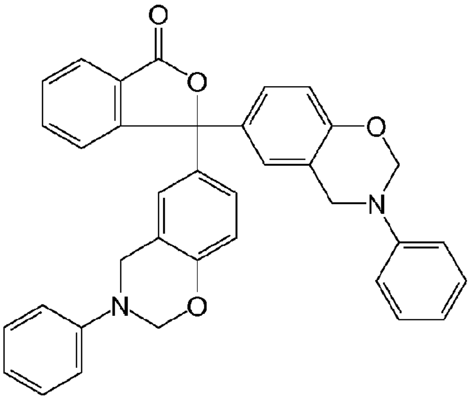

IIe,

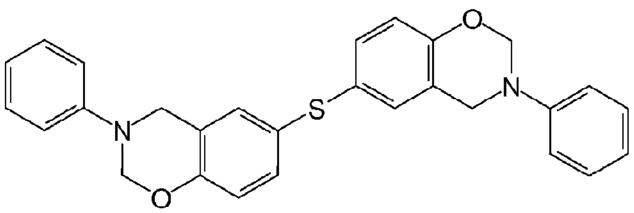

IIf

oder

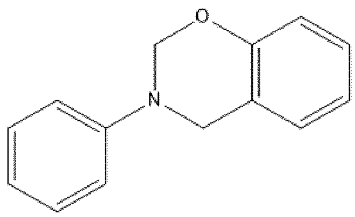

IIg.

6. Härterkomponente nach Anspruch 5, **dadurch gekennzeichnet, dass** das Amin ausgewählt ist aus 2,2,4- oder 2,4,4-Trimethyl-1,6-diaminohexan und Gemischen davon, 1-Amino-3-aminomethyl-3,5,5-trimethylcyclohexan (IPDA), 1,3-Bis(aminomethyl)-cyclohexan (1,3-BAC), 1,4-Bis(aminomethyl)-cyclohexan (1,4 -BAC), 2-Methyl-1,5-pentandiamin (DYTEK A), (3(4),8(9)Bis(aminomethyl)dicyclo[5.2.1.02,6]decan und Isomerengemischen davon (TCD-Diamin), Aminomethyltricyclo[5.2.1.02,6]decan und Isomerengemischen davon (TCD-Amin), 1,6-Hexamethylendiamin, Diethylentriamin (DETA), Triethylentetramin (TETA), Tetraethylenpentamin (TEPA), Pentaethylenhexamin (PEHA), 1,3-Benzoldimethanamin (mXDA), 1,4-Benzoldimethanamin (pXDA) und N,N'-Dimethyl-1,3-benzoldimethanamin, und Mischungen von zwei oder mehreren davon.

7. Härterkomponente (B) nach Anspruch 5, **dadurch gekennzeichnet, dass** das Amin ausgewählt ist aus 1-Amino-3-aminomethyl-3,5,5-trimethylcyclohexan (IPDA), 2-Methyl-1,5-pentandiamin (DYTEK A), m-Xylylendiamin (mXDA) und 1,3-Bis(aminomethyl)-cyclohexan (1,3-BAC) sowie Mischungen daraus.

8. Härterkomponente nach einem der vorhergehenden Ansprüche, **dadurch gekennzeichnet, dass** das Benzoxazin-Amin-Addukt in einem Anteil von 9 Gew.-% bis 65 Gew.-% in der Härterkomponente (B) vorhanden ist, bevorzugt

von 9,5 Gew.-% bis 55 Gew.-%, weiter bevorzugt von 10 Gew.-% bis 45 Gew.-% und besonders bevorzugt von 10 Gew.-% bis 35 Gew.-%.

9. Härterkomponente nach einem der vorhergehenden Ansprüche, **dadurch gekennzeichnet, dass** die Härterkomponente (B) wenigstens einen weiteren Zusatz ausgewählt aus der Gruppe von Beschleunigern, Haftvermittlern, Verdickern und Füllstoffen umfasst.

10. Mehrkomponenten-Epoxidharzmasse umfassend eine Epoxidharzkomponente (A), die wenigstens ein härtbares Epoxidharz enthält, und eine Härterkomponente (B) gemäß einem der Ansprüche 1 bis 9.

11. Mehrkomponenten-Epoxidharzmasse gemäß Anspruch 10, wobei die Mehrkomponenten-Epoxidharzmasse weitere Zusätze ausgewählt aus der Gruppe von Beschleunigern, Haftvermittlern, Reaktivverdünnern, Verdickern, anorganischen Füllstoffen und organischen Füllstoffen umfasst.

12. Mehrkomponenten-Epoxidharzmasse nach Anspruch 10 oder 11, wobei die Mehrkomponenten-Epoxidharzmasse bei einer Temperatur höchstens 40 °C aushärtet.

13. Mehrkomponenten-Epoxidharzmasse nach einem der Ansprüche 10 bis 12, wobei die Mehrkomponenten-Epoxidharzmasse bei einer Umgebungstemperatur von 21°C innerhalb von 48 h oder weniger aushärtet.

14. Verwendung einer Mehrkomponenten-Epoxidharzmasse gemäß einem der Ansprüche 10 bis 13 zur chemischen Befestigung, insbesondere zur Verankerung von Befestigungselementen in Bohrlöchern.

15. Verwendung eines Benzoxazin-Amin-Addukts mit einer Struktur gemäß Formel Ia oder Ib als Beschleuniger in einer Härterkomponente für eine Epoxidharzmasse, bevorzugt einer Epoxidharzmasse zur chemischen Befestigung von Konstruktionselementen.

## Claims

1. Hardener component (B) for a multi-component epoxy resin composition for the chemical fastening of structural elements, comprising a benzoxazine-amine adduct which is selected from the group consisting of substances according to formula Ia, substances according to formula Ib or mixtures thereof, comprising the following structures:

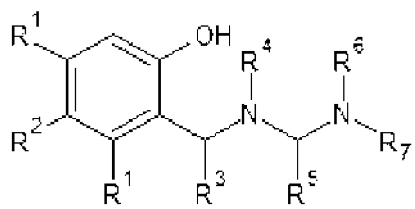

Ia,

and

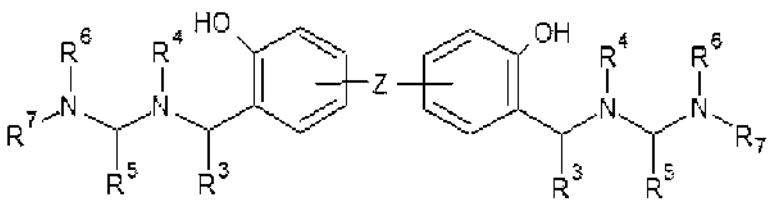

Ib,

$R^1$, $R^2$, $R^3$, $R^4$ and $R^5$ each being independently selected from H, alkyl, cycloalkyl, heterocycloalkyl, aryl, heteroaryl, arylalkyl, heteroalkyl, alkoxy, hydroxyl, hydroxyalkyl, carboxyl, halo, haloalkyl, amino, aminoalkyl, alkylcarbonyloxy, arylcarbonyloxy, alkoxycarbonyl, alkylcarbonyl, alkylsulfonylamino, aminosulfonyl, sulfonic acid

or alkylsulfonyl functional groups, and also from combinations of two or more of these functional groups, it being possible for the functional groups to each be unsubstituted or optionally substituted;

$R^6$ and $R^7$ each independently denoting H or an amino, diamino or polyamino functional group selected from the group consisting of aliphatic, alicyclic, aromatic or araliphatic amine functional groups and also combinations of two or more of these functional groups, it being possible for the functional groups to each be unsubstituted or optionally substituted;

Z being selected from a direct bond, -C(O)-, -S-, -O-, -S(O)-, $-S(O)_2-$, $-C(R^8)(R^9)-$, - $[C(R^8)(R^9)]_m-C(R^8)(R^9)-[C(R^{10})(R^{11})]_n-$, $-[C(R^8)(R^9)]_m-C(R^8)(aryl)-[C(R^{10})(R^{11})]_n-$, - $[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$, $-[C(R^8)(R^9)]_m-S(O)_2-[C(R^{10})(R^{11})]_n-$, a divalent heterocycle and $-[C(R^8)(R^9)]_m$-arylene-$[C(R^{10})(R^{11})]_n-$, m and n each being, independently of one another, between 0 and 10, preferably between 0 and 5, and $R^8$, $R^9$, $R^{10}$ and $R^{11}$ each independently having the same meaning as the functional groups $R^1$ to $R^5$; and

an amine selected from the group consisting of aliphatic, alicyclic, aromatic and araliphatic amines and having an average of at least two reactive hydrogen atoms bonded to a nitrogen atom per molecule;

**characterized in that**

the benzoxazine-amine adduct is present in the hardener component (B) in a proportion of from 8.5 wt.% to 75 wt.%.

2. Hardener component (B) according to claim 1, wherein $R^3$ and $R^5$ each denote H.

3. Hardener component according to either claim 1 or claim 2, wherein Z is selected from a direct bond, $-C(R^8)(R^9)-$, $-C(R^8)(aryl)-$, -C(O)-, -S-, -O-, -S(O)-, $-S(O)_2-$, a divalent heterocycle and $-[C(R^8)(R^9)]_m$-arylene-$[C(R^{10})(R^{11})]_n-$, wherein m and n are each, independently of one another, between 0 and 5.

4. Hardener component (B) according to any of claims 1 to 3, wherein $R^3$ and $R^5$ each denote H and wherein Z is selected from a direct bond and $-C(R^8)(R^9)-$, wherein $R^8$ and $R^9$ are each independently selected from H or $C_1$-$C_4$ alkyl functional groups, preferably from H and methyl, or together form a lactone functional group.

5. Hardener component (B) according to any of the preceding claims, wherein the benzoxazine-amine adduct is obtainable by reacting a benzoxazine with an amine from the group of aliphatic and/or araliphatic amines, diamines and/or polyamines, wherein the benzoxazine has the following structures:

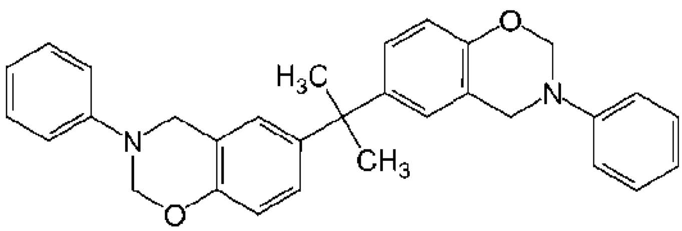

IIc,

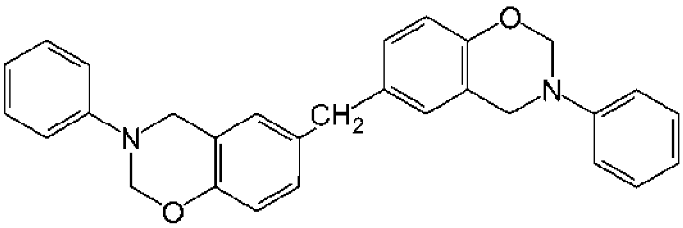

IId,

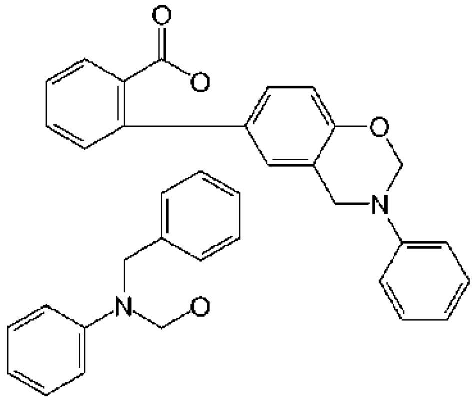

IIe,

or

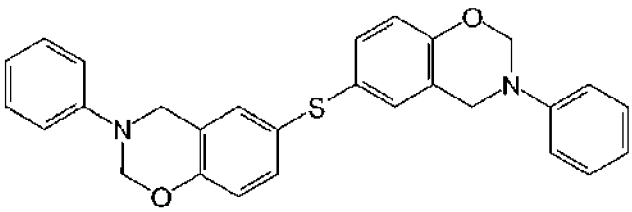

IIf

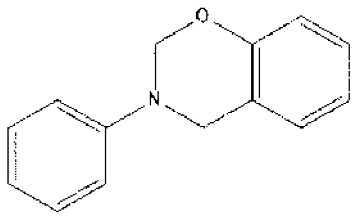

IIg.

**6.** Hardener component according to claim 5, **characterized in that** the amine is selected from 2,2,4- or 2,4,4-trimethyl-1,6-diaminohexane and mixtures thereof, 1-amino-3-aminomethyl-3,5,5-trimethylcyclohexane (IPDA), 1,3-bis(aminomethyl)cyclohexane (1,3-BAC), 1,4-bis(aminomethyl)cyclohexane (1,4-BAC), 2-methyl-1,5-pentanediamine (DYTEK A), (3(4),8(9)bis(aminomethyl)dicyclo[5.2.1.02,6]decane and isomer mixtures thereof (TCD-diamine), aminomethyltricyclo[5.2.1.02,6]decane and isomer mixtures thereof (TCD-amine), 1,6-hexamethylenediamine, diethylenetriamine (DETA), triethylenetetramine (TETA), tetraethylenepentamine (TEPA), pentaethylenehexamine (PEHA), 1,3-benzenedimethanamine (mXDA), 1,4-benzenedimethanamine (pXDA) and N,N'-dimethyl-1,3-benzenedimethanamine, and mixtures of two or more thereof.

**7.** Hardener component (B) according to claim 5, **characterized in that** the amine is selected from 1-amino-3-aminomethyl-3,5,5-trimethylcyclohexane (IPDA), 2-methyl-1,5-pentanediamine (DYTEK A), m-xylylenediamine (mXDA) and 1,3-bis(aminomethyl)cyclohexane (1,3-BAC) and mixtures thereof.

**8.** Hardener component according to any of the preceding claims, **characterized in that** the benzoxazine-amine adduct is present in the hardener component (B) in a proportion of from 9 wt.% to 65 wt.%, preferably from 9.5 wt.% to 55 wt.%, more preferably from 10 wt.% to 45 wt.% and particularly preferably from 10 wt.% to 35 wt.%.

**9.** Hardener component according to any of the preceding claims, **characterized in that** the hardener component (B) comprises at least one further additive selected from the group of accelerators, adhesion promoters, thickeners and fillers.

**10.** Multi-component epoxy resin composition comprising an epoxy resin component (A) which contains at least one curable epoxy resin, and a hardener component (B) according to any of claims 1 to 9.

**11.** Multi-component epoxy resin composition according to claim 10, wherein the multi-component epoxy resin composition comprises further additives selected from the group consisting of accelerators, adhesion promoters, reactive diluents, thickeners, inorganic fillers and organic fillers.

**12.** Multi-component epoxy resin composition according to either claim 10 or claim 11, wherein the multi-component epoxy resin composition cures at a temperature of at most 40°C.

**13.** Multi-component epoxy resin composition according to any of claims 10 to 12, wherein the multi-component epoxy resin composition cures in 48 hours or less at an ambient temperature of 21°C.

**14.** Use of a multi-component epoxy resin composition according to any of claims 10 to 13 for chemical fastening, in particular for anchoring fastening elements in boreholes.

**15.** Use of a benzoxazine-amine adduct comprising a structure according to formula Ia or Ib as an accelerator in a hardener component for an epoxy resin composition, preferably an epoxy resin composition for chemically fastening structural elements.

**Revendications**

**1.** Composant durcisseur (B) pour matière de résine époxy à plusieurs composants permettant la fixation chimique d'éléments de construction, comprenant un produit d'addition benzoxazine-amine qui est choisi dans le groupe constitué par des substances selon la formule Ia, des substances selon la formule Ib ou leurs mélanges, comportant les structures suivantes :

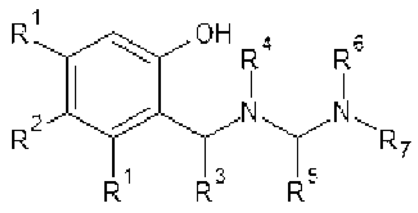

Ia,

et

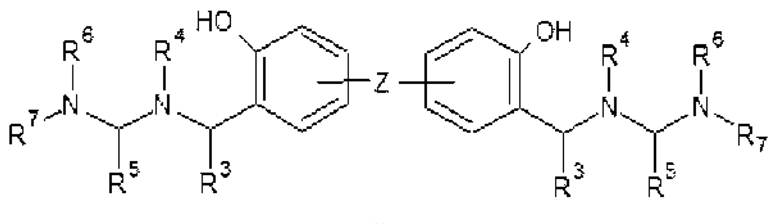

Ib,

$R^1$, $R^2$, $R^3$, $R^4$ et $R^5$ étant respectivement indépendamment choisis parmi H, un radical alkyle, cycloalkyle, hétérocycloalkyle, aryle, hétéroaryle, arylalkyle, hétéroalkyle, alcoxy, hydroxyle, hydroxyalkyle, carboxyle, halo, haloalkyle, amino, aminoalkyle, alkylcarbonyloxy, arylcarbonyloxy, alcoxycarbonyle, alkylcarbonyle, alkylsulfonylamino, aminosulfonyle, acide sulfonique ou alkylsulfonyle, et également parmi des combinaisons de deux ou plus desdits radicaux, les radicaux pouvant être respectivement non substitués ou éventuellement substitués ;
$R^6$ et $R^7$ représentant respectivement indépendamment H ou un radical amino, diamino ou polyamino et étant choisis dans le groupe constitué par des radicaux amine aliphatiques, alicycliques, aromatiques ou araliphatiques et également des combinaisons de deux ou plus desdits radicaux, les radicaux pouvant être respectivement non substitués ou éventuellement substitués ;
Z étant choisi parmi une liaison directe, -C(O)-, -S-, -O-, -S(O)-, $-S(O)_2-$, $-C(R^8)(R^9)-$, $-[C(R^8)(R^9)]_m-C(R^8)(R^9)-[C(R^{10})(R^{11})]_n-$, $-[C(R^8)(R^9)]_m-C(R^8)(\text{aryle})-[C(R^{10})(R^{11})]_n-$, $-[C(R^8)(R^9)]_m-C(O)-[C(R^{10})(R^{11})]_n-$, $-[C(R^8)(R^9)]_m-S-[C(R^{10})(R^{11})]_n-$, $-[C(R^8)(R^9)]_m-O-[C(R^{10})(R^{11})]_n-$, $-[C(R^8)(R^9)]_m-S(O)-[C(R^{10})(R^{11})]_n-$,

-$[C(R^8)(R^9)]_m$-$S(O)_2$-$[C(R^{10})(R^{11})]_n$- , un hétérocycle divalent et -$[C(R^8)(R^9)]_m$-arylène-$[C(R^{10})(R^{11})]_n$-, m et n représentant respectivement indépendamment 0 à 10, de préférence 0 à 5, $R^8$, $R^9$, $R^{10}$ et $R^{11}$ possédant respectivement indépendamment la même représentation que les radicaux $R^1$ à $R^5$ ; et
une amine choisie dans le groupe constitué par des amines aliphatiques, alicycliques, aromatiques et araliphatiques et présentant en moyenne au moins deux atomes d'hydrogène réactifs liés à un atome d'azote par molécule ;
**caractérisé en ce que**
le produit d'addition benzoxazine-amine est présent dans le composant durcisseur (B) en une proportion de 8,5 % en poids à 75 % en poids.

2. Composant durcisseur (B) selon la revendication 1, $R^3$ et $R^5$ représentant respectivement H.

3. Composant durcisseur selon la revendication 1 ou 2, Z étant choisi parmi une liaison directe, -$C(R^8)(R^9)$-, -$C(R^8)$(aryle)-, -C(O)-, -S-, -O-, -S(O)-, -$S(O)_2$-, un hétérocycle divalent et -$[C(R^8)(R^9)]_m$-arylène-$[C(R^{10})(R^{11})]_n$-, m et n représentant respectivement indépendamment 0 à 5.

4. Composant durcisseur (B) selon l'une des revendications 1 à 3, $R^3$ et $R^5$ représentant respectivement H et Z étant choisi parmi une liaison directe et -$C(R^8)(R^9)$-, $R^8$ et $R^9$ étant choisis respectivement indépendamment parmi H ou des radicaux alkyle en $C_1$-$C_4$, de préférence parmi H et méthyle, ou formant ensemble un radical lactone.

5. Composant durcisseur (B) selon l'une des revendications précédentes, le produit d'addition benzoxazine-amine pouvant être obtenu en faisant réagir une benzoxazine avec une amine du groupe des amines, diamines et/ou polyamines aliphatiques et/ou araliphatiques, la benzoxazine présentant les structures suivantes :

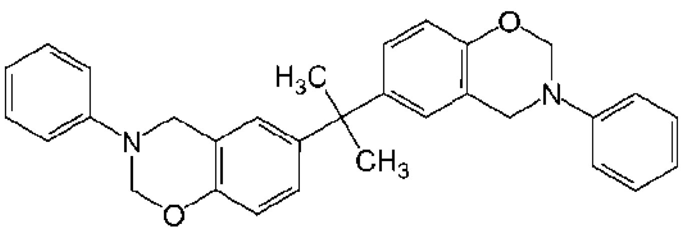

IIc,

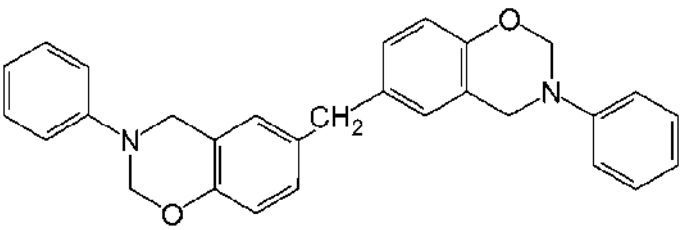

IId,

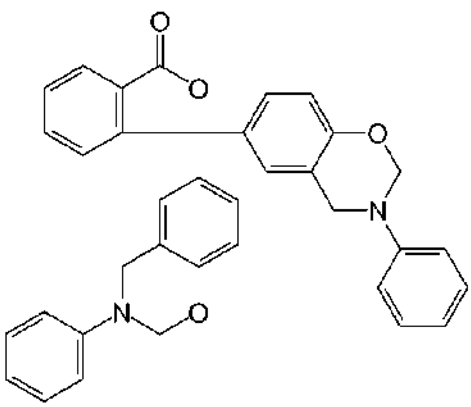

IIe,

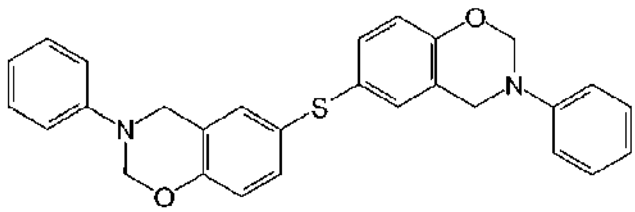

IIf

ou

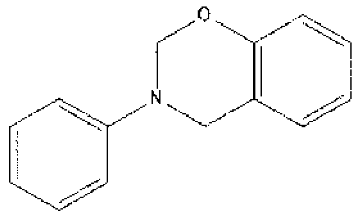

IIg.

6. Composant durcisseur selon la revendication 5, **caractérisé en ce que** l'amine est choisie parmi le 2,2,4- ou le 2,4,4-triméthyl-1,6-diaminohexane et leurs mélanges, le 1-amino-3-aminométhyl-3,5,5-triméthylcyclohexane (IPDA), le 1,3-bis(aminométhyl)cyclohexane (1,3-BAC), le 1,4-bis(aminométhyl)-cyclohexane (1,4-BAC), le 2-méthyl-1,5-pentanediamine (DYTEK A), le (3(4),8(9)bis(aminométhyl)dicyclo[5.2.1.02,6]décane et ses mélanges isomères (TCD-diamine), l'aminométhyltricyclo[5.2.1.02,6]décane et ses mélanges isomères (TCD-amine), le 1,6-hexaméthylènediamine, le diéthylènetriamine (DETA), le triéthylènetétramine (TETA), le tétraéthylènepentamine (TEPA), le pentaéthylènehexamine (PEHA), le 1,3-benzènediméthanamine (mXDA), le 1,4-benzènediméthanamine (pXDA) et le N,N'-diméthyl-1,3-benzènediméthaneamine, et des mélanges de deux ou plus de ceux-ci.

7. Composant durcisseur (B) selon la revendication 5, **caractérisé en ce que** l'amine est choisie parmi le 1-amino-3-aminométhyl-3,5,5-triméthylcyclohexane (IPDA), le 2-méthyl-1,5-pentanediamine (DYTEK A), le m-xylylènediamine (mXDA) et le 1,3-bis(aminométhyl)-cyclohexane (1,3-BAC) et leurs mélanges.

8. Composant durcisseur selon l'une des revendications précédentes, **caractérisé en ce que** le produit d'addition benzoxazine-amine est présent dans le composant durcisseur (B) en une proportion de 9 % en poids à 65 % en poids, de préférence de 9,5 % en poids à 55 % en poids, plus préférablement de 10 % en poids à 45 % en poids et le plus préférablement de 10 % en poids à 35 % en poids.

9. Composant durcisseur selon l'une des revendications précédentes, **caractérisé en ce que** le composant durcisseur (B) comprend au moins un autre additif choisi dans le groupe constitué par les accélérateurs, les promoteurs d'adhérence, les épaississants et les charges.

10. Matière de résine époxy à plusieurs composants comprenant un composant de résine époxy (A) qui contient au moins une résine époxy durcissable, et un composant durcisseur (B) selon l'une des revendications 1 à 9.

11. Matière de résine époxy à plusieurs composants selon la revendication 10, la matière de résine époxy à plusieurs composants comprenant d'autres additifs choisis dans le groupe constitué par les accélérateurs, les promoteurs d'adhérence, les diluants réactifs, les épaississants, les charges inorganiques et les charges organiques.

12. Matière de résine époxy à plusieurs composants selon la revendication 10 ou 11, la matière de résine époxy à plusieurs composants durcissant à une température d'au plus 40 °C.

13. Matière de résine époxy à plusieurs composants selon l'une des revendications 10 à 12, la matière de résine époxy à plusieurs composants durcissant en 48 heures ou moins à une température ambiante de 21 °C.

14. Utilisation d'une matière de résine époxy à plusieurs composants selon l'une des revendications 10 à 13 pour la fixation chimique, en particulier pour l'ancrage d'éléments de fixation dans des forages.

15. Utilisation d'un produit d'addition benzoxazine-amine comportant une structure selon la formule Ia ou Ib comme

accélérateur dans un composant durcisseur pour une matière de résine époxy, de préférence une matière de résine époxy pour la fixation chimique d'éléments de construction.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0149989 A2
- WO 2013063236 A1
- WO 2013048851 A1
- EP 2826796 A1


### In der Beschreibung aufgeführte Nicht-Patentliteratur


- **A. D. MCNAUGHT ; A. WILKINSON.** Compendium of Chemical Terminology. Blackwell Scientific Publications, 1997
- Epoxidharze. **ULRICH CHRIST ; ROB RASING.** Standardwerk von Michael Dornbusch. Vincentz Network GmbH & Co KG, 2015
- *CHEMICAL ABSTRACTS,* 154505-70-1
- *CHEMICAL ABSTRACTS,* 214476-06-9